# EUROPEAN PATENT SPECIFICATION

(11) **EP 0 409 012 B1**
(45) Date of publication and mention of the grant of the patent: **22.02.1995**
(21) Application number: 90112920.5
(22) Date of filing: 06.07.1990
(51) Int. Cl.: H04B 10/16, G02B 6/42

(54) **Unit for amplifying light signals in optical fiber transmission lines**
Baueinheit zur Verstärkung von Lichtsignalen in optischen Faserübertragungsleitungen
Elément d'amplification des signaux de lumière dans des lignes de transmissions à fibres optiques

(30) Priority: 17.07.1989 IT 2120789
(43) Date of publication of application: 23.01.1991
(73) Proprietor: PIRELLI CAVI S.p.A., 20126 Milano (IT)
(72) Inventor: Grasso, Giorgio, Monza (MI) (IT); Righetti, Aldo, Milan (IT)
(74) Representative: Checcacci, Giorgio

(56) References cited:
- EP-A- 0 112 090
- WO-A-86/07221
- ELECTRONICS LETTERS, vol. 25, no. 9, 27th April 1989, pages 594-595, Stevenage,Herts, GB; K. INOUE et al.: "Mutual signal gain saturation in Er3+-doped fibre amplifier around 1.54 mum wavelength"
- PATENT ABSTRACTS OF JAPAN, vol. 13, no. 8 (E-702)[3356], 10th January 1989,page 72 E 702 & JP-A-63 219 186
- PATENT ABSTRACTS OF JAPAN, vol. 2, no. 33 (E-19), 6th March 1978, page 12531 E77 & JP-A-52 155 901
- ELECTRONICS LETTERS, vol. 24, no. 1, 7th January 1988, pages 36-38, Hitchin-Herts, GB; N.A. OLSSON et al.: "400 Mbit/s, 372 km coherent transmission experiment using in-line optical amplifiers"
- PROCEEDINGS OF THE 15TH EUROPEAN CONFERENCE ON OPTICAL COMMUNICATIONS, vol. 3,10th - 14th September 1989, post-deadline papers, pages 42-45, Gothenburg, SE;A. RIGHETTI et al.: "An 11 Gbit/sec, 260 km transmission experiment using adirectly- modulated 1536 nm DFB laser with two Er-doped fiber amplifiers and clock recovery"

## Description

The present invention concerns a unit for amplifying light signals in optical fiber transmission lines of the type comprising a fiber optical amplifier arranged to be connected in use to at least an input optical fiber line through which light signals are transmitted to the amplifier and to at least an output optical fiber line into which the light signals amplified by said fiber optical amplifier are introduced.

As known, in the optical fiber telecommunications, owing to the unavoidable losses of light occurring inside the optical fiber, a gradual attenuation of the signal takes place always along the path of the optical fibres.

For this reason, when it has to be transmitted long-distance signals, it is necessary to use one or more amplifying units which are interposed along the path of the optical fibres according to intervals of pre-fixed length.

A type of amplifying unit that at present is widespread provides fundamentally the use of a fiber optical amplifier that in operation is connected to the optical fibres so as to define, along the path of these latter, an input line through which the signals of light are transmitted to the amplifier itself, as well as an output line through which the amplified signals of light are transmitted in direction of an optical receiver.

At the present state of the technique, the use of these fiber optical amplifiers gives rise to some drawbacks, deriving mainly from the fact that the amplifier is reached not only and exclusively by the useful signal to be amplified, but also by different noise signals which are consequently amplified and introduced again into the output line.

It is found that a certain number of these noise signals comes from the output line and is caused by phenomena of diffusion of light arising unavoidably inside the optical fibres.

More precisely, a part of the light forming the amplified signals gets lost in consequence of a phenomenon of diffusion arising inside the optical fibres.

A part of the back-diffused light return to the amplifiers and therefore is amplified again and introduced into the output line.

Moreover it is to be considered that the amplifier, owing to its intrinsic nature, emits a certain quantity of noise signals which are introduced either into the input line or into the output line.

Owing to the above said phenomena of diffusion, these noise signals come back partly to the amplifier mixing with the useful signals which is really desired to transmit.

As it can be understood from the above, the entry of noise signals into the amplifier and their consequent amplification determines interferences and beat phenomena that, for sufficiently high values (>15 dB) of gain of the amplifier, originate an "interferometric noise" of an amplitude greater than the known noise produced by the amplifier.

The above turns into a not desired reduction of the ratio between the useful signal and the noise down line of the amplifier itself. This reduction in the signal/noise ratio tends to increase by increasing the gain of the fiber optical amplifier, as well as by increasing the number of amplifiers arranged along the path of the fibres.

In this situation great difficulties are met to have the useful signal sufficiently clear when it reaches a receiver placed at a long distance from the source of the signal itself.

From Japanese patents 52-155901 and 63-219186 and from "ELECTRONICS LETTERS", vol. 24, no. 1, 7^{th} January 1988, pages 36-38, it is known that in a laser or in an optical semiconductor amplifier there is the risk of instability and arising of oscillations due to the reflections at the amplifier ends.

The publication ELECTRONICS LETTERS vol 25 no. 9, of 27 April 1989, pages 594-595, by K. Inoue, shows an experimental set-up for measuring signal gain in an Er³⁺ doped fiber. The arrangement includes a dichroic mirror, an optical spectrum analyser and two isolators, one at the input of the doped fiber, close to the dicroic mirror, the other at the output of the doped fiber, close to the optical spectrum analyser.

US patent no. 4,947,134 discloses lightwave systems employing semiconductor optical amplifiers. An optical isolator is used between adjacent amplifiers, to prevent gain instability in the amplifier which could result from reflection of the amplified signal from splices or other discontinuities in the transmission path, and to prevent the build-up of undesirable positive feedback which can result because the amplifier amplifies signals travelling in both directions.

In the above patents and article, in order to eliminate these reflections, it is generically taught to couple an optical isolator to the semiconductor laser, which prevents the light reflected by the coupling surfaces between the line fibres and these devices from reaching the lasers themselves.

In an active-fiber amplifier no interface surfaces are present between the line fibres and the amplifier because the line fibres are directly welded to the amplifier's active fiber; therefore the reflection phenomena are not generally expected.

It has however been discovered that in an active-fiber amplifier, in the absence of reflection limiting means towards the active fiber, it is impossible to reach high amplification gain due to the occurrence of noise of the interferometric type as a result of beats between the direct signal and reflected signals in the line fibres themselves and at all events directed towards the active fiber; the presence of interferometric noise is of little importance in a semiconductor amplifier which has low gains and small construction sizes, whereas it becomes particularly important in an active-fiber amplifier capable of reaching very high gains and having an active fiber of important length generally in the range of some tens of meters, much greater than the coherence distance of the signal generating laser.

In an optical fiber amplifier the problem arises therefor of protecting the amplifying fiber against such noise source and keeping the reflection towards the active fiber itself below critical values so as not to jeopardise the transmission quality, while maintaining high values in the amplification gain.

The main object of the present invention is substantially that of solving the problems of the known technique, by realising an amplifying unit formed in such a way as to prevent considerably the entry of the noise signals into the fiber optical amplifier.

This object is achieved, according to an aspect of the invention, by an unit for amplifying light signals as specified in claim 1, and, according to another aspect of the invention, by an unit for transmitting amplified light signals according to claim 8.

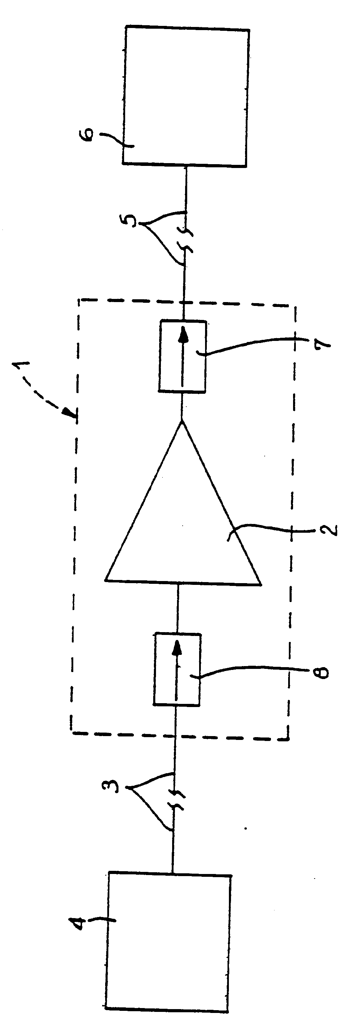

Further characteristics and advantages will better appear from the detailed description of a preferred but not exclusive embodiment of a unit for amplifying signals of light in optical fiber transmission lines, according to the present invention. Said description will be made hereinafter with reference to the attached sheet of drawing, supplied only by way of non-limiting example, which in the single figure shows a block diagram of the amplifying unit forming the object of the present invention arranged to operate along an optical fiber transmission line.

With reference to the cited figure, reference numeral 1 indicates on the whole a unit for amplifying signals of light in optical fiber transmission lines according to the invention.

The amplifying unit 1 comprises conventionally a fiber optical amplifiers 2 arranged to be connected in use to at least an input optical fiber line 3 through which light signals emitted for instance by an optical transmitter 4 or, alternatively, coming from an amplifying unit like that shown and placed up line of the same, are transmitted.

The amplifier 2 is also connected to an output optical fiber line 5 into which the amplified light signal has to be introduced, which through the output line, will be conveyed to an optical receiver 6 or, alternatively, to another amplifying unit like the shown one.

In accordance with the present invention, the amplifying unit 1 comprises also first means 7 for a unidirectional selection interposed between the fiber optical amplifier 2 and the output optical fiber line 5 to prevent the transmission of noise optical signals from the output line to the amplifier. Moreover second means 8 for a unidirectional selection are interposed between the fiber optical amplifier 2 and the input 3 to prevent the transmission of noise signals from the amplifier to the input line.

Preferably, the means 7, 8 for a unidirectional selection comprise at least a first optical insulator and at least a second optical insulator, respectively, both insulators having a low reflectivity. It is provided that the reflectivity of these optical insulators 7, 8, known per se, is lower of at least 10dB with respect to the reflectivity due to Rayleigh scattering of the optical fibres forming the input 3 and output 5 lines.

The working of the amplifying unit forming the object of the present invention is the following one.

In a known way, the amplifier 2 receives the light signals coming from the input line 3 and transmits the amplified signals in direction of the output line 5.

Besides the above said optical signals, the amplifier transmits in a known way also its noise signals, which tend to be introduced both into the input line 3 and into the output line 5.

Advantageously, the presence of the second optical insulator 8 immediately up line of the amplifier 2, does not allow the entry of the above said noise signals into the input line 3.

Lacking said optical insulator, the entry of the amplifier noise signals into the input line 3 should originate, owing to the phenomena of diffusion arising inside the optical fibres, further noise signals, a part of which should reach again the amplifier 2 creating interferences of beats with the useful optical signals, i.e. those transmitted by the optical transmitter 4.

Advantageously, the presence of the first optical insulator 7 immediately down line of the amplifier 2 avoids moreover that the amplifier is reached by noise signals produced along the output line 5 in consequence of the phenomena of diffusion of light arising inside the optical fibres. Lacking the first optical insulator 7, these noise signals should be amplified and introduced again into the output line 5 together with the amplified useful signal, originating thus not desired interferences and/or beat phenomena.

From the above it is understood that the only signals that will reached the output line 5 are the amplified useful signals, together with the small noise signal, negligible among other things, produced by the amplifier 2.

The present invention achieves the aimed purposes. In fact, as demonstrated above, thanks to the presence of the optical insulators immediately up line and down line of the amplifier, the amplifying unit forming the object of the present invention permits to reduce notably, in comparison with the known technique, the entry of noise signals into the output line of the amplifier.

This turner into an increasing of the useful gain of the amplifier, as well as an improved transmission of the optical signals form a transmitter to a receiver placed also at a long distance the one form the other.

## Claims

1. Unit for amplifying light signals in optical fiber transmission lines, comprising an active fiber optical amplifier (2) having an input end and an output end, the input end being intended to be connected to a signal transmitter (4) and the output end being intended to be connected to a signal receiver (6), at least one of the signal transmitter (4) and the signal receiver (6) being far away from the amplifier (2) and being connected thereto by means of a long fiber optic line (3, 5) having a length such that a portion of the optical signals is reflected back due to Rayleigh scattering, characterized by comprising an optical isolator (8, 7) between the amplifier (2) and the long fiber optic line (3, 5), the isolator (8, 7) allowing unidirectional light transmission in the sense from the signal transmitter (4) to the signal receiver (6), wherein the reflectivity of any said isolator (8, 7) is lower than the Rayleigh scattering of the long fiber optic line (3, 5).

2. Unit according to claim 1, wherein both the signal transmitter (4) and the signal receiver (6) are far away from the amplifier (2) and are connected thereto by means of long fiber optic lines (3, 5), the unit (1) comprising two optical isolators (8, 7) between the amplifier (2) and the long fiber optic lines (3, 5), both isolators (8, 7) allowing unidirectional light transmission in the sense from the signal transmitter (4) to the signal receiver (6).

3. Unit according to claim 1 or 2, wherein the reflectivity of any said isolator (8, 7) is lower by at least 10 dB than the Rayleigh scattering of the long fiber optic line (3, 5).

4. Unit according to claim 1 or 2, wherein the amplifier (2) has a gain of at least 15 dB.

5. An optical signal transmission system for transmitting optical signals, comprising a unit according to claim 2 and additionally comprising:
a transmitter (4) of optical signals,
a receiver (6) of optical signals at long distance from the transmitter (4),
a first optical transmission line fiber (3) having a first line fiber input at one end thereof connected to the transmitter (4) and a first line fiber output at the other end thereof connected to a first (8) of the two optical isolators of the unit (1),
a second optical transmission line fiber (5) having a second line fiber output at one end thereof connected to the receiver (6) and having a second line fiber input at the other end thereof connected to a second (7) of the two optical isolators of the unit (1),
wherein at least one of the first and the second line fibers (3, 5) has a length between the input and output thereof greater than the predetermined length of the active fiber in the unit (1), and such that the optical signals applied to the input thereof are significantly attenuated in travelling from the input to the output thereof, and such that a portion of optical signal applied to the other end of the one of the first and second line fiber is reflected back due to Rayleigh scattering.

6. System according to claim 5, wherein the one of the first and second optical transmission line fibers (3, 5) is long relative to the length of the active fiber.

7. System according to claim 6, wherein the length of active fiber is greater than the coherence distance of the optical signals.

8. Unit for transmitting amplified light signals including a long distance optical fiber transmission line (3, 5) and an optical amplifier (2) intended to receive and to send light signals, said long distance optical fiber line (3, 5) being associated with Rayleigh scattering light diffusion phenomena,
characterized by said amplifier (2)
having a gain greater than 15 dB,
being subject to interferometric noise due to inteference or beat phenomena between the useful light signals and the noise signals generated by said diffusion phenomena, and
being connected to said scattering optical fiber line (3, 5) through unidirectional selection means (7, 8) placed between said amplifier (2) and said scattering fiber optic line (3, 5) to prevent back transmission,
wherein said unidirectional selection means (7, 8) has a reflectivity lower by at least 10 dB than the Rayleigh scattering of said back reflecting fiber optic line (3, 5).

## Patentansprüche

1. Einheit zur Verstärkung von Lichtsignalen in Lichtleiter-Übertragungsstrecken mit einem aktiven faseroptischen Verstärker (2), der einen Eingang und einen Ausgang aufweist, wobei vorgesehen ist, den Eingang mit einem Signalsender (4) und den Ausgang mit einem Signalempfänger (6) zu verbinden, wobei sich der Signalsender (4) und/oder der Signalempfänger (6) weit entfernt vom Verstärker (2) befinden und mittels einer langen Lichtleiterstrecke (3, 5) mit dem Verstärker (2) verbunden sind, wobei die Lichtleiter-Übertragungsstrecke (3, 5) eine solche Länge hat, daß ein Teil des optischen Signals aufgrund der Rayleigh-Streuung rückgestreut wird,
dadurch **gekennzeichnet**,
daß sich zwischen dem Verstärker (2) und der langen Lichtleiter-Übertragungsstrecke (3, 5) ein optischer Isolator (8, 7) befindet, welcher eine einseitig gerichtete Lichtübertragung in der Richtung vom Signalsender (4) zum Signalempfänger (6) gestattet, wobei das Reflexionsvermögen eines der Isolatoren (8, 7) kleiner ist als die Rayleigh-Streuung der langen Lichtleiterstrecke (3, 5).

2. Einheit nach Anspruch 1, dadurch gekennzeichnet, daß sowohl der Signalsender (4) als auch der Signalempfänger (6) weit vom Verstärker (2) entfernt und mit diesem über lange Lichtleiterstrecken (3, 5) verbunden sind, die Einheit (1) zwei optische Isolatoren (8, 7) zwischen dem Verstärker (2) und den langen Lichtleiter-Strecken (3, 5) enthält, wobei beide Isolatoren (8, 7) eine einseitig gerichtete Lichtübertragung vom Signalsender (4) zum Signalempfänger (6) gestatten.

3. Einheit nach Anspruch 1 oder 2, dadurch gekennzeichnet, daß das Reflexionsvermögen eines der Isolatoren (8, 7) bei mindestens 10 dB kleiner ist als die Rayleigh-Streuung der langen Lichtleiter-Strecke (3, 5).

4. Einheit nach Anspruch 1 oder 2, dadurch gekennzeichnet, daß der Verstärker (2) eine Verstärkung von mindestens 15 dB aufweist.

5. Optisches Signalübertragungssystem zur Übertragung optischer Signale, welches eine Einheit nach Anspruch 2 aufweist und zusätzlich die folgenden Einrichtungen enthält:
- einen Sender (4) für optische Signale,
- einen Empfänger (6) für optische Signale, der vom Sender (4) weit entfernt ist,
- eine erste Lichtleiter-Übertragungsstrecke (3), deren Eingang mit dem Sender (4) und deren Ausgang mit dem ersten (8) der beiden optischen Isolatoren der Einheit (1) verbunden ist,
- eine zweite Lichtleiter-Übertragungsstrecke (5), deren Ausgang mit dem Empfänger (6) und deren Eingang mit dem zweiten (7) der beiden optischen Isolatoren der Einheit (1) verbunden ist,
dadurch gekennzeichnet,
daß mindestens einer der beiden Lichtleiter (3, 5) eine Länge zwischen seinem Eingang und Ausgang aufweist, die
- größer ist als die vorbestimmte Länge der aktiven Faser in der Einheit (1),
- so groß ist, daß die an ihren Eingang angelegten optischen Signale während der Übertragung vom Eingang zum Ausgang signifikant abgeschwächt werden,
- so groß ist, daß ein Teil des an das andere Ende dieses einen ersten oder zweiten Lichtleiters gelangenden optischen Signals aufgrund der Rayleigh-Streuung rückgestreut wird.

6. System nach Anspruch 5, dadurch gekennzeichnet, daß die erste (3) oder die zweite (5) optische Übertragungsleitung lang ist im Vergleich zur Länge der aktiven Faser.

7. System nach Anspruch 6, dadurch gekennzeichnet, daß die Lange der aktiven Faser größer ist als die Kohärenzlänge der optischen Signale.

8. Einheit zur Übertragung verstärkter Lichtsignale, die eine Langstrecken-Lichtleiterübertragungsleitung (3, 5) und einen optischen Verstärker (2), welcher für den Empfang und das Senden vorgesehen ist, aufweist, wobei in der Langstrekken-Lichtleiterübertragungsleitung (3, 5) Rayleigh-Streuungs Lichtdiffusionsphänomene auftreten,
dadurch gekennzeichnet,
daß der Verstärker (2)
- eine Verstärkung hat, die größer als 15 dB ist,
- dem durch Interferenz oder Schwebungsphänomene zwischen den Nutz-Lichtsignalen und den durch die Diffusionphänomene erzeugten Rauschsignalen hervorgerufenen interferometrischen Rauschen unterworfen ist,
- mit der streuenden Lichtleiterstrecke (3, 5) durch zwischen dem Verstärker (2) und der streuenden Lichtleiterstrecke (3, 5) zur Verhinderung von Rückübertragung angeordneten, einseitig gerichteten Selektionseinrichtungen (7, 8) verbunden ist,
wobei die einseitig gerichteten Selektionseinrichtungen (7, 8) bei mindestens 10 dB ein kleineres Reflexionsvermögen aufweisen als die Rayleigh-Streuung der streuenden Lichtleiterstrecke (3, 5).

## Revendications

1. Elément d'amplification des signaux lumineux dans des lignes de transmission à fibres optiques, comprenant un amplificateur optique (2) à fibre active comportant une extrémité d'entrée et une exrémité de sortie, l'extrémité d'entrée étant destinée à être connectée à un émetteur (4) de signaux et l'extrémité de sortie étant destinée à être connectée à un récepteur (6) de signaux, au moins l'un de ces émetteur (4) et récepteur (6) de signaux étant disposé loin de l'amplificateur (2) et lui étant connecté au moyen d'une longue ligne (3, 5) à fibres optiques ayant une longueur telle qu'une partie des signaux optiques est renvoyée vers l'arrière par suite de la diffusion de Rayleigh, caractérisé en ce qu'il comprend un isolateur optique (8, 7) entre l'amplificateur (2) et la longue ligne (3,5) à fibres optiques, l'isolateur (8, 7) permettant une transmission unidirectionnelle de lumière dans le sens allant de l'émetteur (4) de signaux vers le récepteur (6) de signaux, la réflectivité de l'un quelconque des isolateurs précités (8, 7) étant plus faible que la diffusion de Rayleigh de la longue ligne (3, 5) à fibres optiques.

2. Elément selon la revendication 1, dans lequel l'émetteur (4) de signaux et le récepteur (6) de signaux se trouvent tous deux loin de l'amplificateur (2) et y sont connectés au moyen de longues lignes (3, 5) à fibres optiques, l'élément (1) comprenant deux isolateurs optiques (8, 7) entre l'amplificateur (2) et les longues lignes (3, 5) à fibres optiques, les deux isolateurs (8, 7) permettant tous deux une transmission unidirectionnelle de lumière dans le sens allant de l'émetteur (4) de signaux vers le récepteur (6) de signaux.

3. Elément selon la revendication 1 ou 2, dans lequel la réflectivité de l'un quelconque desdits isolateurs (8, 7) est inférieure d'au moins 10 dB à la diffusion de Rayleigh de la longue linge (3, 5) à fibres optiques.

4. Elément selon la revendication 1 ou la revendication 2, dans lequel l'amplificateur (2) présente un gain d'au moins 15 dB.

5. Système de transmission de signaux optiques pour transmettre des signaux optiques, comprenant un élément selon la revendication 2 et comprenant, en outre ;
un émetteur (4) de signaux optiques,
un récepteur (6) de signaux optiques situé à une grande distance de l'émetteur (4),
une première fibre (3) de ligne de transmission optique comportant une première entrée de fibre de ligne connectée à une de ses extrémités à l'émetteur (1) et une première sortie de fibre de ligne à son autre extrémité connectée à un premier (8) des deux isolateurs optiques de l'élément (1),
une seconde fibre (5) de ligne de transmission optique comportant une seconde sortie de fibre de ligne à une de ses extrémités connectée au récepteur (6) et comportant une seconde entrée de fibre de ligne à son autre extrémité connectée à un second (7) des deux isolateurs de l'élément (1),
dans lequel au moins une des première et seconde fibres de ligne (3, 5) a, entre son entrée et sa sortie, une longueur qui est plus grande que la longueur prédéterminée de la fibre active de l'élément (1), et de telle sorte que les signaux optiques appliqués à l'entrée de cet éléments soient considérablement atténués pendant leur déplacement depuis l'entrée jusqu'à la sortie de ce dernier, et de telle sorte qu'une partie du signal optique appliqué à l'autre extrémité de ladite fibre des première et seconde fibres de ligne soit renvoyée vers l'arrière par suite de la diffusion de Rayleigh.

6. Système selon la revendication 5, dans lequel ladite fibre desdites première et seconde fibres (3, 5) de ligne de transmission optique est longue par rapport à la longueur de la fibre active.

7. Système selon la revendication 6, dans lequel la longueur de la fibre active est supérieure à la distance de cohérence des signaux optiques.

8. Elément pour transmettre des signaux lumineux amplifiés comprenant une ligne de transmission (3, 5) à fibres optiques pour longue distance et un amplificateur optique (2) destiné à recevoir et à envoyer des signaux lumineux, ladite ligne (3, 5) à fibres optiques pour longue distance étant associée au phénomène de diffusion de la lumière par diffusion de Rayleigh,
caractérisé par le fait :
que ledit amplificateur (2) présente une gain plus grand que 15 dB,
qu'il est soumis à un bruit interférométrique par suite d'un phénomène d'interférence ou de battement entre les signaux lumineux utiles et les signaux de bruit générés par le phénomène de diffusion, et
qu'il est connecté à ladite ligne (3, 5) à fibres optiques à diffusion par l'intermédiaire d'un moyen de sélection unidirectionnelle (7, 8) placé entre ledit amplificateur (2) et ladite ligne (3, 5) à fibres optiques pour empêcher une rétro-transmission,
dans lequel ledit moyen de sélection unidirectionnel (7, 8) a une réflectivité inférieure d'au moins 10 dB à la diffusion de Rayleigh de la ligne (3, 5) à fibres optiques à rétro-réflexion.
